# EUROPEAN PATENT SPECIFICATION

(11) **EP 1 597 976 B1**
(45) Date of publication and mention of the grant of the patent: **30.01.2013**
(21) Application number: 04017487.2
(22) Date of filing: 23.07.2004
(51) Int. Cl.: A23G 9/32

(54) **Use of polyol esters of fatty acids in aerated frozen confection with improved nutritional attributes**
Verwendung von Polyolestern von Fettsäuren in gefrorenen und durchlüfteten Konfektzubereitungen mit verbesserten Nutritional-Eigenschaften
Utilisation d'esters de polyols et d'acides gras dans la production des crèmes glacées aérées à propriétés nutritionnelles améliorées

(30) Priority: 21.05.2004 EP 04012146
(43) Date of publication of application: 23.11.2005
(73) Proprietor: Nestec S.A., 1800 Vevey (CH)
(72) Inventor: Schlegel, Myriam, 60000 Fouquenies (FR); Vieira, Josélio Batista, 95290 L'Isle-Adam (FR)
(74) Representative: Baumgartner Harris, Pauline

(56) References cited:
- WO-A-01/06865
- WO-A-03/015530
- GB-A- 1 446 144
- GB-A- 1 484 167
- US-A- 4 505 943
- US-A- 5 084 295
- US-A- 5 175 013
- US-A- 5 194 281
- US-A- 5 486 372
- US-A1- 2003 134 025
- PATENT ABSTRACTS OF JAPAN vol. 0113, no. 17 (C-452), 15 October 1987 (1987-10-15) & JP 62 106840 A (FUJI OIL CO LTD), 18 May 1987 (1987-05-18)
- DATABASE WPI Section Ch, Week 199513 Derwent Publications Ltd., London, GB; Class B07, AN 1990-035088 XP002301568 -& FI 93 791 B (SEMPER AB) 28 February 1995 (1995-02-28)

## Description

### Field of the invention

The present invention relates to the field of aerated frozen confections and in particular to frozen confections with improved nutritional attributes.

### Background of the invention

Frozen confections have been enjoyed by consumers for years, but generally have not been considered to be nutritious products. Ice cream is above all pleasure, taste, fun, happiness but not necessarily health and wellness. Ice cream has a very positive dairy heritage which offers a good basis for goodness from natural ingredients. Low fat alternatives are now the trend but often they sacrifice taste and texture for improved nutritional properties and as a result are not accepted by consumers. In fact their success will highly depend on taste and texture without compromise. Frozen confections are particularly appreciated for their smooth characteristics. However, frozen confections of improved nutritional attributes which are low in fat, contain nutritional fats and/or have reduced calorie values should also have organoleptic characteristics of smoothness.

Many attempts have been made to develop ice cream which retains its desirable taste and texture and which has improved nutritious properties.

Frozen confections are traditionally made using ingredients such as: fat, milk solids-not-fat, sweeteners, stabilizers, emulsifiers and water. The various ingredients are mixed together, the mixture is then homogenized, pasteurized, cooled, optionally aged at about 2 to 6°C and deep-frozen with stirring with injection of air in a freezer to provide a degree of overrun of the order of 30 to 150%.

Various gums and/or emulsifiers have been used as additives with the aim of improving the stability, the smoothness and the resistance of frozen confections to heat shocks. These may include guar gum, carob or guar seed flour, alginate, carboxymethyl cellulose, xanthan, carrageenan, synthetic or natural emulsifiers. The milk proteins contained in the milk dry extract participate in this stabilization due to their water-binding property.

However, the use of gums has the disadvantage of conferring on the product a texture which is sometimes too firm or gummy.

WO 01/06865 is concerned with a process for the production of aerated frozen confections which are smooth and have resistance to heat shocks, which makes use of a specific ternary blend of emulsifiers and milk solids-not-fat coming predominantly from skim milk.

GB 1446144 is concerned with a process for making whipped food product having an overrun of 150 to 300% and a reduced level of fat by mixing a sweetened aqueous base to a whipping agent. The whipping agent comprises propylene glycol monostearate and glycerol monostearate in amounts which may range from 0.04 to 2.4% and 0.02 to 1.8% respectively.

US 5,084,295 relates to low calorie frozen desserts which are obtained by replacing fat by a wholly or partially non digestible intermediate melting polyol polyesters. The desserts comprise oil-in-water emulsifiers to maintain a stable emulsion.

The abstract of JP62-106840 describes water-in-oil-in-water emulsions which comprise polyglyceride as emulsifiers.

FI 890820 pertains to an emulsion which can be frozen and eaten like ice-cream and which comprises a glucose polymer for controlling the osmolality of the product.

US 5,486,372 relates to frozen dietary dessert products having reduced calories by using polyol fatty acid polyesters. Emulsifiers are said to be present at a level of 0.3 to 0.7%.

The problem which the invention proposes to solve consists in improving the nutritional attributes of aerated frozen confections without compromising their organoleptic qualities, particularly their smoothness.

Aerated frozen confections made with vegetable oils rich in polyunsaturated fatty acids (PUFA) which show texture and sensory attributes which are comparable to a product made with conventional vegetable fats currently used in the aerated frozen confections preparation have been produced.

An objective of the invention is to provide "light" aerated frozen confections with reduced calorie values which have texture and sensory properties which are comparable to a product made with high levels of conventional vegetable fats currently used in the aerated frozen confections preparation of higher calorie values.

### Summary of the invention

To this end, the present invention consists in the use of propylene glycol monoester of fatty acids in an amount of at least 0.2% by weight and unsaturated monoglyceride or saturated mono-diglyceride in an amount of 0.04 to 0.16% by weight as primary emulsifier in the production of aerated frozen confections with a fat content of 0% to 4%.

The percentages indicated in the description relate to the percentages by weight except in the case of the overrun values which are defined in % by volume.

### Detailed description of the invention

In the invention, a frozen confection may comprise 0% to 4% fat, 10 to 25% of sweeteners, 8 to 10 % of milk solids-not-fat, 0.1 to 0.5 % of stabilizers, at least 0.2 % of propylene glycol monoester of fatty acid as primary emulsifier and water as balance.

The milk solids-not-fat used for making a frozen confection may be powdered or concentrated defatted sweet whey, for example. They may include powdered or concentrated skim milk, for example. Milk solids-not-fat may also be derived from a commercial mixture of milk powder and whey proteins whose functionality has been modified by specific denaturation treatments.

Preferably, propylene glycol monoester of fatty acid is used as a primary emulsifier in an amount of 0.2 to 0.5 % and most preferably in an amount of at least 0.26 %. Preferably propylene glycol monostearate/palmitate is used.

The frozen confections comprise one additional emulsifier, unsaturated monoglyceride or saturated mono-di glyceride in an amount of 0.04 to 0.16 % by weight as partial replacement of propylene glycol monoester of fatty acid.

The frozen confections may comprise stabilizing agents; these may include carob flour, guar flour, alginates, carboxymethyl cellulose, xanthan, carrageenan, gelatin, starches used alone or in the form of a mixture at a dose of 0.1 to 0.5 %, preferably about 0.25 %.

The fat used is of vegetable or animal origin, preferably rich in PUFA. Suitable oils may be non-hydrogenated vegetable fats such as high oleic oils or blends which may contain long chain polyunsaturated fatty acids such as gammalinolenic, docosahexaenoic and eicospentaenoic acids. Thus the fat may be obtained from sources such as seeds sunflower, canola, safflower, rapeseed, soy, rice, borage; nuts such as walnuts, almonds, macadamia, coconut, palm, palm kernel, apricot kernel; other plants such as olive, peanut; fish or microbial oils.

The sweetener used may be sucrose, glucose, fructose, glucose syrup with DE (dextrose equivalent) varying from 20 to 42, polydextrose, lactitol, inulin or a mixture thereof, for example. The formulation of the product in the invention may in addition comprise colourings such as beta-carotene, for example, and/or any type of flavourings or perfumes customarily used to flavour frozen confections, such as vanilla, strawberry or chocolate for example.

The compositions used in the invention may optionally comprise additions such as fruit or fruit pieces, for example, or nuts, or hazelnuts, whole or in pieces, for example.

Furthermore, the organoleptic qualities of the frozen compositions are not reduced compared with the traditional products. Thus, the characteristics of smoothness and creaminess are increased and in particular, better preserved during the period of storage. In the frozen confections, it is the use of propylene glycol monoester of fatty acid, as emulsifier which makes it possible in addition to reduce remarkably the growth of water crystals in the products subjected to heat shock and thus it confers greater stability to heat shocks on the product.

For manufacturing the products, the ingredients entering into the composition of a frozen confection may be dispersed at around approximately 60 to 70°C for approximately 15 to 30 min., for example. The whole may be heated and homogenized at around 70 to 75°C, for example, at a pressure of the order of 140 to 220 bar, for example. These steps of dispersion, heating and homogenisation make it possible to bring about hydration of the stabilizer.

The mixture may then be pasteurized according to methods known to persons skilled in the art, for example at around 80 to 90°C for 10 to 30 s. The homogenisation-heating step may be carried out at a pasteurization temperature which brings about, on its own, pasteurization of the mixture. The mixture may then be cooled to around 2 to 8°C by known means. This mixture may then be aged or otherwise for 4 to 24 h at around 2 to 6°C, for example, with or without stirring. After this aging step, the mixture may be frozen at around -3 to -7°C, and preferably at about -4.5 to -6° C with stirring with injection of gas so as to produce a degree of overrun of the order of 30 to 150 %, for example. The mixture obtained may then be hardened by freezing at around -20 to -40°C, for example.

After the aging step, the frozen compositions may, for example, be extruded in the form of bars having a greater or lesser degree of overrun, with the aid of an ice-cream industry refrigerated scraped surface heat exchanger or freezer with injection of gas. The aerated semi-frozen composition coming out of the freezer may also be filled into containers or moulds under pressure using a bottom-up filler, for example.

To evaluate the influence of the replacement of traditionally used fats with PUFA rich oils and the remarkable properties of the emulsifier applied, various textural, microscopic and macroscopic tests may be carried out.

Standard heat shock: the samples initially stored at -30°C are subjected, for 7 days, to temperature cycles of -8°C/12h followed by -20°C/12h. After 7 days of stabilisation at -30° C, the melting parameters are evaluated for these samples which were subjected to a heat shock.

### Size of the ice crystals in an ice confection

An aliquot of ice confection is mixed with an equivalent quantity of glycerol and observed under a microscope at a temperature of -10°C. The measurement may be carried out in a chamber at -10°C equipped with microscope and a camera. It is thus possible to measure the mean diameter of the crystals (in µm) in the finished products and in the products which have been subjected to a heat shock (microscope magnification 129).

The frozen confections exhibit improved stability and organoleptic characteristics compared to traditional products. These products exhibit remarkable reduced ice crystal growth compared with traditional products when submitted to heat shock treatment. This property confers to the product smooth texture, which is considerably preserved after unfavourable storage conditions. Such functionalities make it possible to envisage production, storage and distribution of the products according to the invention extending over time.

The expression "reduced crystal growth" is understood to mean an increase in the mean diameter of the ice crystals of less than 50% after heat shock.

The invention is described below with reference to examples of preferred embodiments and modes of formulation. However, various adaptations and/or modifications may be made while remaining within the scope of the present invention.

### Examples

### Example 1, comparative examples 1.1 and 1.2: use of oils rich in polyunsaturated fatty acids (PUFA)

The objective of these examples is to produce aerated frozen confections made with liquid vegetable oils and showing texture and sensory attributes which are comparable to a product made with conventional vegetable fats currently used in the aerated frozen dessert preparation.

We were surprised to find that the use of polyol esters of fatty acids (PEFA), preferable propylene glycol monostearate (PGMS) alone or in combination with other food-grade emulsifiers, such as mono-diglycerides, produces aerated frozen products rich in PUFA oil with outstanding texture properties and with good heat shock stability.

Examples of frozen confections and comparative examples are produced according to the formulations indicated in Table 1 below.

The various ingredients are dispersed at 65°C and then undergo a hydration step at 60°C for 20 minutes. The mixture is then homogenized at 180 bar with the aid of homogenizer and then pasteurized at 86°C for 20 s. After cooling to 5°C, the mixture is aged for 24 hours at 4°C, without stirring. Finally, the mixture is frozen at about -5.1 to -5.7 °C draw temperature with a degree of overrun of about 100 %. The ice confection obtained is hardened at -30°C by conventional means.

**Table 1**

| Ingredient | Ex. 1 | Comp Ex. 1.1 | Comp Ex. 1.2 |
|---|---|---|---|
| Vegetable lauric fat blend | 0 | 0 | 10.20 |
| PUFA-rich oil | 11.10 | 11.10 | 0 |
| Sweet whey powder (SWP) | 2.00 | 2.00 | 2.00 |
| Skim milk powder (MSK) | 8.00 | 8.00 | 8.00 |
| PGMS | 0.33 | 0 | 0 |
| UMG | 0.05 | 0 | 0 |
| SMDG | 0 | 0.30 | 0.30 |
| Guar Gum | 0.25 | 0.067 | 0.067 |
| Sucrose | 12 | 12 | 12 |
| Glucose syrup | 5.00 | 5.00 | 5.00 |
| Water | 61.32 | 61.40 | 62.30 |

| | | | |
|---|---|---|---|
| Vegetable lauric fat blend: Blend of palm and palm kernel oil; PUFA-rich oil blend: Blend of rapeseed oil and high-melting fat fractions; Sweet whey powder: whey proteins, non demineralised from Euroserum, 10 to 12 % protein; Skim milk powder from BBA; PGMS: Propylene glycol monostearate PGMS SPV® from Danisco; UMG: Unsaturated monoglyceride DIMODAN UP/B® from Danisco; SMDG: Saturated Mono-diglycerides: CREMODAN 60 Veg® from Danisco; Guar gum: Procol G2 from Habgen; Glucose syrup: Glucose MD 40 from Roquette. | | | |

The nutritional attribute achieved in example 1 relates to the use of "healthier" fats or oils, i.e. those containing high levels of unsaturated and no or low levels of trans-fatty acids. Some conventional fats used in the production of aerated frozen desserts have been linked to development of so-called "Western civilisation deseases" like heart desease, high blood pressure, diabetes etc., due to the presence of high levels of saturated and trans-fatty acids. Table 2 below gives the fatty acid composition of the recipes given in Table 1.

**Table 2**

| | g/100g | | |
|---|---|---|---|
| | Example 1 | Comp. ex. 1.1 | Comp. ex.1.2 |
| Saturated FA | 1.8 | 1.8 | 8.0 |
| MUFA | 6.4 | 6.3 | 2.1 |
| PUFA | 3.2 | 3.2 | 0.4 |

| | | | |
|---|---|---|---|
| MUFA: Monounsaturated fatty acid. | | | |

Table 3 below shows the mean diameter of the ice crystals for products described in Table 1. Sample of example 1 which contains a blend of PGMS and UMG has smaller ice crystals and the crystals are significantly more resistant to growth following heat shock treatment compared to the other samples.

**Table 3**

| Sample | Ice crystal size (µm) | |
|---|---|---|
| | Before heat shock | After heat schock |
| Example 1 | 18 | 20 |
| Comp. ex. 1.1 | 28 | 48 |
| Comp. ex. 1.2 | 31 | 47 |

The heat shock samples were also evaluated by 10 trained panellists who score each texture attribute in a scale from 0 to 100. The results are given in Table 4 below. Sample of example 1 which contains the blend of PGMS and UMG was smoother than both other samples.

**Table 4**

| | Attribute Smoothness |
|---|---|
| Example 1 | 74.0 |
| Comp. ex. 1.1 | 60.0 |
| Comp. ex. 1.2 | 46.7 |

### Examples 2 and 3, comparative example 2: Calorie reduction in aerated frozen confections

The objective of these examples is to produce aerated frozen confections with reduced calorie values and having acceptable texture and sensory properties.

We were surprised to find that the use of polyol esters of fatty acids (PEFA), preferably PGMS alone or in combination with other food grade emulsifiers, such as mono-diglycerides, produces aerated calorie-reduced frozen products with outstanding texture properties and with good heat shock stability.

Examples of aerated frozen confections are produced according to the formulations indicated in Table 5 below.

**Table 5**

| Ingredients /Trials | Example 2 | Example 3 | Comp. ex. 2 |
|---|---|---|---|
| Vegetable fat blend (Palm oil, Coconut oil) | 0 | 0 | 9.00 |
| Sweet whey powder (SWP) | 10.00 | 10.00 | 10.00 |
| PGMS | 0.30 | 0.30 | 0 |
| UMG | 0.08 | 0.08 | 0.08 |
| SMDG | 0 | 0 | 0.30 |
| Guar Gum | 0.75 | 0.75 | 0.25 |
| Sucrose | 10.00 | 8.00 | 14.00 |
| Glucose syrup DE 40 | 10.00 | 10.00 | 3.00 |
| Glucose syrup DE 20 | 8.00 | 0 | 0 |
| Lactitol | 0 | 2.00 | 0 |
| Polydextrose | 0 | 4.00 | 0 |
| Inuline | 0 | 4.00 | 0 |
| Water | 60.87 | 60.87 | 63.37 |

In these examples the fat level was decreased to 0.3%, with the fat coming only from the emulsifiers. Some changes were made with texturizing agent such as stabilizers or carbohydrate based ingredients, and an adjustment of total solids to 38%. The total solids in comparative example 2 are 36%.

The ice crystal size of the samples submitted to heat shock was measured and the results are given in Table 6 below.

**Table 6**

| Examples | 2 | 3 | Comp. ex. 2 |
|---|---|---|---|
| Mean Ice crystal size (µm) | 16.0 | 20.0 | 54.6 |

Despite the adjustment of stabilizers, we were expecting the products with a 0.3% fat level to have a bigger mean ice crystal size after heat shock. It is well known that the fat plays a key role in the stability of the ice cream and in particular on the ice crystal size. With the addition of PGMS in both recipes, it was possible to keep a very small ice crystal size despite the low fat level. In addition, the texture of the products of example 2 and 3 were showing far superior smoothness and increased chewyness than the product of comparative example 2 with 9 % fat.

In addition, a sensory analysis was done. The samples are evaluated by a panel of people trained in the evaluation of texture. To that end, samples of examples 2 and 3 made according to the invention are compared with the standard ice cream of comparative example 2.

The questionnaire distributed contains the descriptive attributes for texture in the mouth:
- smoothness, absence of particles, ice crystals in the ice cream mass;
- chewyness, resistance to bite.
The results in % are given in Table 7 below.

**Table 7**

| Analyse | Example 2 | Example 3 | Comp. ex. 2 | Probability |
|---|---|---|---|---|
| Smoothness | 92.50 | 92.80 | 50.70 | <0.0001*** |
| Chewiness | 64.50 | 71.40 | 51.60 | 0.0022** |

| | | | | |
|---|---|---|---|---|
| ** Significant to 1 % | | | | |
| *** Significant to 0.1 % | | | | |

### Examples 4 and 5, comparative example 3: Calorie reduction in aerated frozen confections

The objective of these examples is to produce aerated frozen confections with reduced calorie values and having acceptable texture and sensory properties.

Examples of aerated frozen confections according to the present invention were produced according to the formulations indicated in Table 8 below.

**Table 8**

| Ingredients /Trials | Comp. Ex. 3 | Example 4 | Example 5 |
|---|---|---|---|
| Vegetable fat blend (PO CO) | 9 | 4 | 4 |
| Sweet whey powder (SWP) | 10.00 | 10.00 | 10.00 |
| PGMS | 0 | 0.30 | 0.3 |
| UMG | 0.08 | 0.08 | 0 |
| SMDG | 0.3 | 0 | 0.08 |
| Guar Gum | 0.25 | 0.25 | 0.25 |
| Sucrose | 14.00 | 14.00 | 14.00 |
| Glucose syrup DE 40 | 1.10 | 1.10 | 1.10 |
| Glucose syrup DE 20-23 | 1.8 | 7.10 | 7.10 |
| Water | 63.47 | 63.47 | 63.47 |

In table 8, recipe Comp. Ex. 3 is used as a standard. In recipes of Examples 4 and 5, the fat level was decreased to 4% with changes in the type of emulsifiers used in combination with the PGMS. Some changes were made with carbohydrate-based ingredients in order to adjust the total solids to 38%.

As illustrated with table 9 below, the texture of the products of Examples 4 and 5 shows superior smoothness than the recipe of Comp. Ex 3 with 9 % fat.

**Table 9**

| Analyse | Comp. Ex. 3 | Example 4 | Example 5 |
|---|---|---|---|
| Smoothness | 51.22 | 76.44 | 82.78 |

It is clear that the examples 2 to 5 demonstrate that it is possible to produce "light" version of aerated frozen products with reduced fat content and having acceptable texture and sensory properties.

We were surprised to find that with the use of polyol esters of fatty acids (PEFA), preferably PGMS alone or in combination with other food grade emulsifiers, such as mono-diglycerides, we were able to reduce the fat content in aerated frozen products and keep the same smoothness and heat shock stability of a standard "full-fat" version.

## Claims

1. Use of propylene glycol monoester of fatty acids in an amount of at least 0.2% by weight and unsaturated monoglyceride or saturated mono-di glyceride in an amount of 0.04 to 0.16% by weight as primary emulsifier in the production of aerated frozen confections with a fat content of 0% to 4%.

2. Use according to claim 1, wherein the propylene glycol monoester of fatty acids is propylene glycol monostearate/palmitate.

3. Use according to any of the preceding claims, wherein the aerated frozen confection, comprising sweeteners, milk solids-not-fat, water, emulsifier and stabiliser, comprises by weight:
4 to 10% milk solids-not-fat
10 to 25% sweeteners
0 to 0.5% stabilisers
and it has an overrun of 30 to 150% by volume.

4. Use according to claim 3, wherein the aerated frozen confection comprises 2 to 4% fat by weight.

5. Use according to claim 3, wherein the milk solids-not-fat are powdered or concentrated defatted sweet whey.

6. Use according to claim 3, wherein the milk solids-not-fat comprise powdered or concentrated skim milk.

7. Use according to claim 3, wherein the aerated confection comprises at least on stabiliser chosen from the group comprising carob flour, guar flour, alginates, carboxymethyl cellulose, xanthan, carrageenan, gelatine, starches used alone or in the form of a mixture at a dose of 0.1 to 0.5%, preferably about 0.25% by weight.

8. Use according to claim 3, wherein the sweeteners are chosen from the group comprising sucrose, glucose, fructose, glucose syrup, lactitol, polydextrose, inulin or a mixture of these agents.

9. Use according to claim 1, wherein the smoothness of the aerated frozen confection is preserved and a reduced ice crystal growth after heat shock conditions is obtained.

10. Use according to claim 1, wherein propylene glycol monoester of fatty acid is used as an emulsifier in an amount of at least 0.26% by weight.

11. Use according to claim 10, wherein propylene glycol monostearate/palmitate is used as emulsifier.

## Patentansprüche

1. Verwendung von Propylenglykol-Monoester von Fettsäuren von mindestens 0,2 Gew.-% und ungesättigtem Monoglycerid oder gesättigtem Monodiglycerid von 0,04 bis 0,16 Gew.-% als primärer Emulgator bei der Herstellung von gefrorenem, mit Luft durchsetztem Konfekt mit einem Fettgehalt von 0% bis 4%.

2. Verwendung nach Anspruch 1, wobei es sich bei dem Propylenglykol-Monoester von Fettsäuren um Propylenglykol-Monostearat/Palmitat handelt.

3. Verwendung nach einem der vorhergehenden Ansprüche, wobei das gefrorene, mit Luft durchsetzte Konfekt mit Süßungsmitteln, fettfreien Milchfeststoffen, Emulgator und Stabilisator in Gew.-% folgendes aufweist:
4 bis 10 Gew.-% fettfreie Milchfeststoffe
10 bis 25% Süßungsmittel
0 bis 0,5% Stabilisatoren
und einen Aufschlag von 30 bis 150 Volumen-% besitzt.

4. Verwendung nach Anspruch 3, wobei das gefrorene, mit Luft durchsetzte Konfekt 2 bis 4 Gew.-% Fett besitzt.

5. Verwendung nach Anspruch 3, wobei es sich bei den fettfreien Milchfeststoffen um fettfreies Süßmolkenpulver oder -konzentrat handelt.

6. Verwendung nach Anspruch 3, wobei die fettfreien Milchfeststoffe aus Magermilchpulver oder Magermilchkonzentrat bestehen.

7. Verwendung nach Anspruch 3, wobei das gefrorene, mit Luft durchsetzte Konfekt mindestens einen Stabilisator aufweist, der aus der Gruppe bestehend aus Johannisbrotkemmehl, Guarkernmehl, Alginat, Carboxymethylcellulose, Xanthan, Carrageen, Gelatine, Speisestärke ausgewählt ist, die allein oder in Form einer Mischung in einer Menge von 0,1 bis 0,5 Gew.-%, vorzugsweise ca. 0,25 Gew.-%, verwendet werden.

8. Verwendung nach Anspruch 3, wobei die Süßungsmittel aus der Gruppe bestehend aus Saccharose, Glukose, Fruktose, Glukosesirup, Laktit, Polydextrose, Inulin oder aus einer Mischung dieser Stoffe ausgewählt sind.

9. Verwendung nach Anspruch 1, wobei die Glattheit des gefrorenen, mit Luft durchsetzten Konfektes bewahrt bleibt und man nach der Wärmeschockbehandlung ein reduziertes Eiskristallwachstum erhält.

10. Verwendung nach Anspruch 1, wobei Propylenglykol-Monoester der Fettsäure als Emulgator in einer Menge von mindestens 0,26 Gew.-% verwendet wird.

11. Verwendung nach Anspruch 10, wobei Propylenglykol-Monostearat/Palmitat als Emulgator verwendet wird.

## Revendications

1. Utilisation de monoester de propylène glycol d'acides gras en une quantité d'au moins 0,2% en poids et monoglycéride non saturé ou mono-diglycéride saturé en une quantité de 0,04 à 0,16% en poids comme émulsifiant primaire dans la production de confiseries congelées aérées avec une teneur en matières grasses de 0% à 4%.

2. Utilisation selon la revendication 1, dans laquelle le monoester de propylène glycol d'acides gras est le monostéarate/palmitate de propylène glycol.

3. Utilisation selon l'une quelconque des revendications précédentes, dans laquelle la confiserie congelée aérée, comprenant édulcorants, matières solides non grasses de lait, eau, émulsifiant et stabilisateur, comprend en poids :
4 à 10% de matières solides non grasses de lait
10 à 25% d'édulcorants
0 à 0,5% de stabilisateurs
et présente un foisonnement de 30 à 150% en volume.

4. Utilisation selon la revendication 3, dans laquelle la confiserie congelée aérée de 2 à 4% de matière grasse en poids.

5. Utilisation selon la revendication 3, dans laquelle les matières solides non grasses de lait sont du lactosérum sucré dégraissé en poudre ou concentré.

6. Utilisation selon la revendication 3, dans laquelle les matières solides non grasses de lait comprennent du lait écrémé en poudre ou concentré.

7. Utilisation selon la revendication 3, dans laquelle la confiserie aérée comprend au moins un stabilisateur choisi parmi le groupe comprenant farine de caroube, farine de guar, alginates, carboxyméthylcellulose, xanthane, carraghénine, gélatine, amidons utilisés seuls ou sous la forme d'un mélange à une dose de 0,1 à 0,5%, de préférence d'environ 0,25% en poids.

8. Utilisation selon la revendication 3, dans laquelle les édulcorants sont choisis parmi le groupe comprenant saccharose, glucose, fructose, sirop de glucose, lactitol, polydextrose, inuline ou un mélange de ces agents.

9. Utilisation selon la revendication 1, dans laquelle l'onctuosité de la confiserie congelée aérée est préservée et une croissance de cristaux de glace réduite est obtenue après des conditions de choc thermique.

10. Utilisation selon la revendication 1, dans laquelle le monoester de propylène glycol d'acides gras est utilisé comme un émulsifiant dans une quantité d'au moins 0,26% en poids.

11. Utilisation selon la revendication 10, dans laquelle le monostéarate/palmitate de propylène glycol est utilisé comme émulsifiant.
